# EUROPÄISCHE PATENTSCHRIFT

(11) **EP 3 820 245 B1**
(45) Veröffentlichungstag und Bekanntmachung des Hinweises auf die Patenterteilung: **10.05.2023**
(21) Anmeldenummer: 20205470.6
(22) Anmeldetag: 03.11.2020
(51) Int. Cl.: H05B 3/50, B60H 1/22, F24H 3/04, F24H 9/1863

(54) **PTC-HEIZEINRICHTUNG UND ELEKTRISCHE HEIZVORRICHTUNG MIT EINER SOLCHEN PTC-HEIZEINRICHTUNG UND VERFAHREN ZUR HERSTELLUNG EINER ELEKTRISCHEN HEIZVORRICHTUNG**
PTC HEATING DEVICE AND ELECTRIC HEATING DEVICE WITH SUCH A PTC HEATING DEVICE AND METHOD FOR PRODUCING AN ELECTRIC HEATING DEVICE
DISPOSITIF DE CHAUFFAGE PTC ET DISPOSITIF DE CHAUFFAGE ÉLECTRIQUE DOTÉ D'UN TEL DISPOSITIF DE CHAUFFAGE PTC ET PROCÉDÉ DE FABRICATION D'UN DISPOSITIF DE CHAUFFAGE ÉLECTRIQUE

(30) Priorität: 07.11.2019 DE 102019217234
(43) Veröffentlichungstag der Anmeldung: 12.05.2021
(73) Patentinhaber: Eberspächer catem GmbH & Co. KG, 76863 Herxheim (DE)
(72) Erfinder: Niederer, Michael, 76889 Kapellen-Drusweiler (DE); Freitag, Rüdiger, 76829 Landau (DE)
(74) Vertreter: Grünecker Patent- und Rechtsanwälte PartG mbB

(56) Entgegenhaltungen:
- EP-A1- 3 101 364
- EP-A1- 3 101 365
- EP-A1- 3 416 456
- US-A1- 2007 068 913
- US-A1- 2018 156 494

## Beschreibung

Die vorliegende Erfindung betrifft eine PTC-Heizeinrichtung für eine elektrische Heizvorrichtung. Die erfindungsgemäße PTC-Heizeinrichtung hat ein Gehäuse, das zumindest ein PTC-Element, elektrisch mit dem PTC-Element verbundene Leiterbahnen und ggf. wärmeleitend gegen das PTC-Element anliegende Isolierlagen als Einheit fügt und von den Kontaktzungen überragt ist, die zur Bestromung des PTC-Elementes mit unterschiedlicher Polarität mit den Leiterbahnen elektrisch leitend verbunden sind.

Eine solche PTC-Heizeinrichtung ist beispielsweise aus EP 2 190 256 A1 bekannt. Diese PTC-Heizeinrichtung hat einen Rahmen, der den Rahmen durchsetzende Rahmenöffnungen aufweist, in denen jeweils zumindest ein PTC-Element aufgenommen ist, welches beidseitig mit die Leiterbahnen ausbildenden Kontaktblechen versehen ist. Auf der dem PTC-Element gegenüberliegenden Seite liegt jeweils eine Isolierlage an dem Kontaktblech an. Diese Elemente sind mit einem Klebstoff umspritzt, wodurch die den Leistungsstrom führenden Komponenten des PTC-Heizelements gegenüber der Außenseite des PTC-Heizelementes eingesiegelt sein sollen.

Gemäß einem alternativen Voraschlag nach EP 2 724 086 ist eine PTC-Heizeinrichtung in einem Flachrohr aufgenommen, um die PTC-Heizeinrichtung von dem zu erwärmenden Medium zu trennen. Das bei dem zuvor erwähnten Stand der Technik vorgesehene Flachrohr ist ein Bespiel einer Heizrippe im Sinne der vorliegenden Erfindung. Eine Heizrippe im Sinne der vorliegenden Erfindung kann auch von einer Trennwand abragen, die eine Heiz- bzw. Zirkulationskammer zur Erwärmung eines Mediums von einer Anschlusskammer trennt, in welcher die Kontaktzonen freiliegen.

US2007/068913 offenbart eine PCT-Heizeinrichtung gemäß dem Oberbegriff des Anspruchs 1.

Das Einbringen einer PTC-Heizeinrichtung in die Heizrippe ist problembehaftet, nicht zuletzt, da die Innenwände der Aufnahmetasche der Heizrippe gut wärmeleitend an der wärmeabgebenden Freifläche der PTC-Heizeinrichtung anliegen sollen, was bedingt, dass der Lichtabstand zwischen den entsprechenden Innenwänden und den wärmeabgebenden Freiflächen der PTC-Heizeinrichtung sehr gering, wenn nicht gar nur noch im Toleranzbereich vorhanden sein soll. So muss die PTC-Heizeinrichtung exakt relativ zu der Aufnahmetasche positioniert werden, um eine Beschädigung der PTC-Heizeinrichtung beim Einbringen in die Heizrippe zu vermeiden.

Die vorliegende Erfindung will eine Lösung schaffen, die dieses Problem ganz oder teilweise behebt.

Hierzu schlägt die vorliegende Erfindung eine PTC-Heizeinrichtung mit den Merkmalen von Anspruch 1 vor.

Die erfindungsgemäße PTC-Heizeinrichtung hat in an sich bekannter Weise zumindest ein PTC-Element und Leiterbahnen, die üblicherweise an sich gegenüberliegenden Oberflächen des PTC-Elementes anliegen. Die Leiterbahnen und das zumindest eine PTC-Element liegen üblicherweise in einer durch das Gehäuse gebildeten Rahmenöffnung. An der Außenseite der Leiterbahnen kann insbesondere bei Hochvoltanwendungen und/oder für den Einbau der erfindungsgemäßen PTC-Heizeinrichtung in eine metallische Heizrippe, zumindest an der Außenseite einer der Leiterbahnen eine Isolierschicht vorgesehen sein. Diese Isolierschicht deckt die Leiterbahn bzw. das PTC-Element üblicherweise vollständig ab. Bevorzugt sind beide Leiterbahnen an ihrer Außenseite mit einer entsprechenden Isolierschicht versehen. Die Isolierschicht kann durch eine Keramikplatte, beispielsweise eine Aluminiumoxidplatte gebildet sein. Die Isolierschicht kann auch einen mehrschichtigen Aufbau haben, beispielsweise aus einer Kombination einer Kunststofffolie mit einer Keramikplatte gebildet sein, wie dies beispielsweise aus EP 1 768 457 A1 bekannt ist. Auf besagte Isolierlagen kann aber auch verzichtet werden, wenn beispielsweise die Innenfläche der Heizrippe mit einem elektrisch isolierenden Material beschichtet ist.

Das bestückte Gehäuse hat sich gegenüberliegende Ausnehmungen. In den Ausnehmungen kann beispielsweise das PTC-Element mit seiner Hauptseitenfläche freiliegen bzw. eine außen daran anliegende Leiterbahn dort vorgesehen sein oder aber eine Isolierlage, die außen gegen das PTC-Element oder die Leiterbahn angelegt ist. Jedenfalls befindet im Bereich der beiden Ausnehmungen jeweils eine wärmeabgebende Freifläche der PTC-Heizeinrichtung. Als Freifläche wird dabei die äußere Fläche der PTC-Heizeinrichtung verstanden, die wärmeleitend mit einer Hauptseitenfläche des PTC-Elementes verbunden ist. Diese Hauptseitenfläche ist die größte Seitenfläche des üblicherweise quaderförmig ausgebildeten PTC-Elementes. Die anderen Flächen, die diese Hauptseitenflächen üblicherweise in einer rechtwinkligen Erstreckung zu den Hauptseitenflächen verbinden, werden im Folgenden als Stirnseitenflächen bezeichnet. Sie haben eine wesentlich geringere Breite als die Hauptseitenflächen. Die Breite der Stirnseitenflächen ist üblicherweise zumindest um einen Faktor 3 kleiner als die Breite der Hauptseitenflächen. Die Breite der Stirnseitenflächen bestimmt die Höhe des PTC-Elementes. Die Leiterbahnen liegen üblicherweise gegen die die Wärme auskoppelnden Hauptseitenflächen des PTC-Elementes an, so dass die Wärme von den Hauptseitenflächen des PTC-Elementes durch die Leiterbahne und gegebenenfalls durch die Isolierlage hindurch bis zu der wärmeabgebenden Freifläche gelangen kann. Die sich gegenüberliegenden Freiflächen haben einen größeren Abstand in Dickenrichtung des rahmenförmigen Gehäuses zueinander als das rahmenförmige Gehäuse selbst. So bilden die wärmeabgebenden Flächen relativ zu dem rahmenförmigen Gehäuse in der Regel leicht vorspringende Außenflächen der PTC-Heizeinrichtung aus. Über diese Freiflächen erfolgt ganz überwiegend die Wärmeauskopplung der von dem PTC-Element erzeugten Wärme.

Bei dem erfindungsgemäßen rahmenförmigen Gehäuse sind an einem vorlaufenden Rahmenholm Führungslaschen vorgesehen Diese Führungslaschen überragen die ihnen jeweils zugeordnete wärmeabgebende Fläche in einem Ausgangszustand. Die Führungslaschen sind verschwenkbar an dem vorlaufenden Rahmenholm gelagert. Sie sind üblicherweise über ein Filmscharnier mit dem Rahmenholm verbunden. Die elastischen Führungslaschen sind in der Regel auch schon in ihrem nicht verschwenkten Ausgangszustand schräg in Richtung auf die Freifläche, d. h., weg von dem vorlaufenden Rahmenholm geneigt. Die elastischen Führungslaschen sind elastisch nach innen verschwenkbar.

So wird durch die an gegenüberliegenden Seiten des rahmenförmigen Gehäuse abragenden elastischen Führungslaschen eine keilförmige Führung gebildet, die das Einbringen der PTC-Heizeinrichtung in die Aufnahmetasche der Heizrippe erleichtern soll. Die keilförmige Führung erlaubt eine Zentrierung der PTC-Heizeinrichtung gegenüber den Rändern der Aufnahmetasche beim Einschieben der PTC-Heizeinrichtung in die Heizrippe. Die Heizrippe kann wie im Stand der Technik durch ein Flachrohr gebildet sein, welches beispielsweise an dem in Einführrichtung gegenüberliegenden Ende durch Verformen und nachfolgendes Verschweißen oder Verkleben der gegenüberliegenden Ränder abgedichtet ist.

Die Elastizität der Führungslaschen erlaubt es, die Führungslaschen nach dem Zentrieren der PTC-Heizeinrichtung relativ zu der Heizrippe die PTC-Heizeinrichtung in die Heizrippe einzubringen, wobei die elastischen Führungslaschen nach innen verschwenken. Sie können dabei weiterhin die Einbringbewegung gegenüber den Innenflächen führen, so dass die wärmeabgebenden Freiflächen in vorbestimmter Weise an den Innenwänden der Aufnahmetasche vorbeigleiten.

So bietet die vorliegende Erfindung die Möglichkeit, die PTC-Heizeinrichtung einfach gegenüber der Aufnahmetasche der Heizrippe zu positionieren und in diese einzubringen, ohne dass die Gefahr besteht, dass die PTC-Heizeinrichtung Schaden nimmt.

Bevorzugt ist das rahmenförmige Gehäuse aus Kunststoff gebildet und bildet die Führungslaschen einteilig aus. Wie zuvor erwähnt sind die elastischen Führungslaschen üblicherweise über ein Filmscharnier mit dem vorlaufenden Rahmenholm verbunden. Der vorlaufende Rahmenholm ist dabei derjenige Holm, der zuerst in die Aufnahmetasche eingebracht wird. Der vorlaufende Rahmenholm befindet sich üblicherweise gegenüberliegend zu einem Rahmenholm, der von den Kontaktzungen überragt ist. Die Kontaktzungen ragen in der Regel von der gleichen Seite von dem Gehäuse ab. Der vorlaufende Rahmenholm ist dementsprechend das unterste Element innerhalb der Aufnahmetasche, ausgehend von den Rändern derselben.

Im Hinblick auf eine möglichst ungehinderte Verschwenkbewegung der elastischen Führungslaschen wird gemäß einer bevorzugten Weiterbildung der vorliegenden Erfindung vorgeschlagen, zumindest eine Ausnehmung vorzugsehen, die angepasst ausgebildet ist, die nach innen verschwenkte Führungslasche in sich aufzunehmen. Bevorzugt sind für zwei von gegenüberliegenden Seiten des rahmenförmigen Gehäuse abragende Führungslaschen in einer einzigen Ausnehmung vorgesehen. Diese Ausnehmung kann die beiden, von gegenüberliegenden Seiten einschwenkenden elastischen Führungslaschen ganz oder teilweise in sich aufnehmen.

In einer bevorzugten Weiterbildung der vorliegenden Erfindung sind jeweils zwei Paare von zu gegenüberliegenden Seiten abragenden Führungslaschen in Breitenrichtung des Gehäuses nebeneinander an dem vorlaufenden Rahmenholm vorgesehen. Die Paare sind dementsprechend in Breitenrichtung, d. h., quer zur Einbringrichtung der PTC-Heizeinrichtung in die Heizrippe relativ zueinander beabstandet.

Mit der vorliegenden Erfindung wird ferner eine elektrische Heizvorrichtung mit den Merkmalen von Anspruch 6 angegeben. Diese elektrische Heizvorrichtung kann eine Heizvorrichtung zur Erwärmung eines Mediums in einem Kraftfahrzeug sein. Das Medium kann ein flüssiges oder gasförmiges Medium, insbesondere Luft sein. Die elektrische Heizvorrichtung hat eine Trennwand, die eine Anschlusskammer von einer Heizkammer trennt. In die Heizkammer ragt die Heizrippe hinein, die die PTC-Heizeinrichtung nach der vorliegenden Erfindung in sich aufnimmt. Die Kontaktzungen zum elektrischen Anschluss der PTC-Heizeinrichtung an den Leistungsstrom liegen in der Anschlusskammer frei und sind dort elektrisch leitend mit dem Leistungsstrom verbunden, in der Regel über eine Steckverbindung.

Mit der vorliegenden Erfindung wird ferner ein Verfahren mit den Merkmalen von Anspruch 7 angegeben, das zur Herstellung der zuvor erwähnten elektrischen Heizvorrichtung dient. Die erfindungsgemäße PTC-Heizeinrichtung wird dazu mit dem vorlaufenden Rahmenholm zuerst in die Heizrippe eingebracht. Dabei werden die zunächst in ihrem Ausgangszustand keilförmig von dem vorlaufenden Rahmenholm abragenden elastischen Führungslaschen gegen gegenüberliegende Ränder der Aufnahmetasche angelegt, wodurch die zuvor erwähnte Zentrierung der PTC-Heizeinrichtung erfolgt. Mit zunehmender Einbringbewegung werden die elastischen Führungslaschen nach innen verschwenkt. Sie können die Einführbewegung weiter begleiten, indem sie sich elastisch an gegenüberliegende Innenflächen der Aufnahmetasche abstützen. Am Ende des Verfahrens werden die wärmeabgebenden Freiflächen an diese gegenüberliegenden Wände wärmeleitend angelegt. Dies muss nicht notwendig bereits die Folge der Einbringbewegung der PTC-Heizeinrichtung in die Heizrippe sein. Vielmehr wird diese bevorzugt nach dem Einbringen der PTC-Heizeinrichtung verformt, so dass sich die einander gegenüberliegenden Innenwände der Heizrippe wärmeleitend gegen die Freiflächen anlegen. Dabei ist zu beachten, dass die dazu notwenige Umformung der Heizrippe so erfolgt, dass nach Entlastung eines die Umformung bewirkenden Umformwerkzeugs sich entspannende elastische Anteile der Umformung nicht dazu führen, dass sich die Innenwände wieder von den wärmeabgebenden Freiflächen abheben. Vielmehr wird üblicherweise ein die Freifläche jeweils seitlich umgebender Rand der Heizrippe umgeformt. Die Heizrippe wird dementsprechend nicht nur gegen die wärmeabgebende Freifläche angelegt, sondern auch nach innen über die Freifläche hinaus verformt, und zwar im Randbereich der Heizrippe dort, wo die PTC-Heizeinrichtung nicht vorgesehen ist.

Weiter Einzelheiten und Vorteilteile der vorliegenden Erfindung ergeben sich aus der nachfolgenden Beschreibung eines Ausführungsbeispiels in Verbindung mit der Zeichnung. In dieser zeigen:
- Fig. 1: eine perspektivische Explosionsdarstellung des Ausführungsbeispiels einer PTC-Heizeinrichtung;
- Fig. 2: eine perspektivische Seitenansicht des in Fig. 1 gezeigten Ausführungsbeispiels einer PTC-Heizeinrichtung vor dem Fügen mit einem Flachrohr;
- Fig. 3: die Darstellung nach Fig. 2 in einer Längsschnittansicht;
- Fig. 4: eine Längsschnittansicht gemäß Fig. 3 nach dem Fügen;
- Fig. 5: eine Längsschnittansicht gemäß Fig. 4 nach dem Umformen des Flachrohres und
- Fig. 6: eine perspektivische Seitenansicht eines Ausführungsbeispiels einer PTC-Heizeinrichtung.

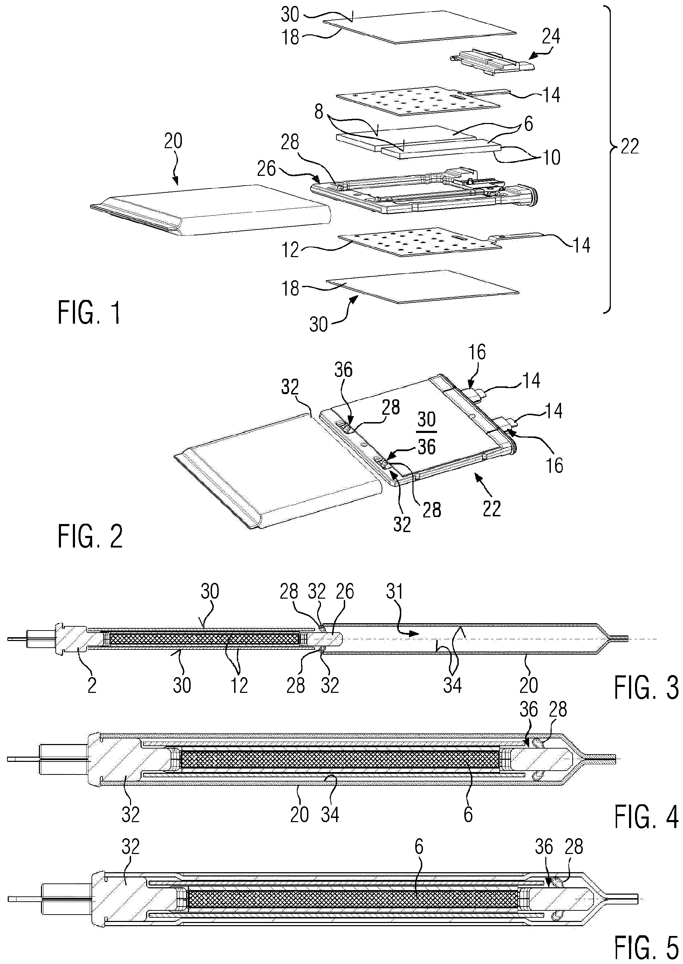

Das in Fig. 1 gezeigte Ausführungsbeispiel einer PTC-Heizeinrichtung hat ein Gehäuse 2 aus Kunststoff, welches rahmenförmig ausgebildet ist und einen Aufnahmeraum 4 zur Aufnahme von PTC-Elementen 6 ausformt. Die beiden PTC-Elemente 6 sind jeweils quaderförmig ausgebildet und haben einander gegenüberliegende Oberflächen 8, die die Hauptseitenflächen des PTC-Elementes 6 bilden und die jeweils durch umlaufende Stirnflächen 10 miteinander verbunden sind. Gegenüberliegend zu der Oberfläche 8 sind jeweils Leiterbahnen in Form von Kontaktblechen 12 gezeigt, die jeweils eine durch Stanzen und Biegen aus dem Blechmaterial ausgeformte Kontaktzunge 14 haben. Korrespondierend zu diesen Kontaktzungen 14 sind an dem Gehäuse 2 Stutzen 16 vorgesehen, die die jeweiligen Kontaktzungen 14 in sich aufnehmen, so dass die Kontaktzungen 14 mit ihrem freien Ende das Gehäuse 2 überragen. Diese freien Enden der Kontaktzungen 14 dienen der Bestromung der PTC-Elemente 6 innerhalb des Gehäuses 2.

Mit Bezugszeichen 18 sind Isolierlagen in Form von Aluminiumoxidplatten gezeigt, deren Grundfläche größer als die Grundfläche der Kontaktbleche 12 (ohne die Kontaktzunge 14) ist und welche ganz überwiegend das rahmenförmige Gehäuse 2 im gefügten Zustand überdecken.

In Fig. 1 ist ferner eine Heizrippe 20 in Form eines unterseitig geschlossenen Flachrohres aus Metall dargestellt, in welches das insgesamt mit Bezugszeichen 22 gekennzeichnete Ausführungsbeispiel der PTC-Heizeinrichtung eingeschoben soll.

Die Fig. 1 verdeutlicht eine Gehäusekappe 24, die nach der Montage der PTC-Elemente 6 in der Aufnahme des Gehäuses 2 und der Kontaktbleche 12 mit dem Gehäuse 2 verbunden wird. Die Kontaktzunge 14 haben Bohrungen. Das Gehäuse 2 hat dazu angepasst ausgebildete Stifte, die die Bohrungen nach der Montage durchsetzen. Die Gehäusekappe 24 wird mit dem Gehäuse 2 verklipst oder anderweitig verbunden, wodurch die Kontaktzungen 14 und damit die Kontaktbleche 12 mit dem Gehäuse 2 fest verbunden ist.

Das Gehäuse 2 hat einen vorlaufenden Rahmenholm, der mit Bezugszeichen 26 gekennzeichnet und an zwei verschiedenen Positionen in Breitenrichtung, jeweils beidseitig, von elastischen Führungslaschen 28 überragt ist. Diese elastischen Führungslaschen 28 sind über Filmscharniere an das Gehäuse 2 angeschlossen. Sie sind verschwenkbar gelagert. Die Führungslaschen 28 sind schräg nach hinten geneigt. Diese Neigung ist insbesondere Fig. 3 bis 5 zu entnehmen. Die elastischen Führungslaschen 28 sind in Richtung auf eine wärmeabgebende Freifläche 30 geneigt, d. h., nach hinten in Bezug auf eine Einführrichtung. Diese Freifläche 30 wird vorliegend durch die Außenfläche der jeweiligen Aluminiumoxidplatten 18 gebildet.

Die elastischen Führungslaschen 28 erlauben eine Zentrierung der PTC-Heizeinrichtung vor dem Einführen in eine durch die Heizrippe 20 gebildete Aufnahmetasche 31. Diese Zentrierung ist in Fig. 3 dargestellt. Ersichtlich fluchtet die Mittellängsachse der PTC-Heizeinrichtung 22 mit der Mittellängsachse der Heizrippe 20. Die elastischen Führungslaschen 28 liegen in Fig. 3 gegen einander gegenüberliegende Ränder 32 der Heizrippe 20 an.

Die Situation nach dem Fügen ist in Fig. 4 dargestellt. Die elastischen Führungslaschen 28 sind nahe des unterseitig geschlossenen Bodens der Heizrippe 20 vorgesehen. Die Ränder 32 liegen gegen einen Kragen des Gehäuses 2 an, wodurch die Endlage der PTC-Heizeinrichtung 22 innerhalb der Heizrippe 20 vorgegeben ist. In Fig. 4 befindet sich zwischen den wärmeabgebenden Freiflächen 30 und einander gegenüberliegenden Innenflächen 34 der Heizrippe 20 noch ein Spalt.

Dieser wird durch Umformen geschlossen. Ersichtlich ist in Fig. 5 die Heizrippe 20 so umgeformt, dass die Innenfläche 34 der Aufnahmetasche 31 unmittelbar die Freifläche 30 kontaktiert, so dass eine gute Wärmeausleitung bis hin zu der Außenseite der Heizrippe 20 gegeben ist.

Fig. 2 verdeutlicht die bei dem Ausführungsbeispiel gewählte Anordnung der Führungslaschen 28. Diese sind paarweise in einer Ausnehmung 36 vorgesehen. In jeder der Ausnehmungen 36 ist jeweils ein Paar von Führungslaschen 28 aufgenommen. Aus einer Ausnehmung 36 ragt je eine Führungslasche zu der einen Freifläche 30 und eine andere zu der gegenüberliegenden Freifläche 30 ab. Die Ausnehmungen 36 sind so dimensioniert, dass die elastischen Führungslaschen 28 beim Einbringen der PTC-Heizeinrichtung in die Aufnahmetasche 31 in die Ausnehmung 36 verschwenken und in der Ausnehmung 36 aufgenommen werden können.

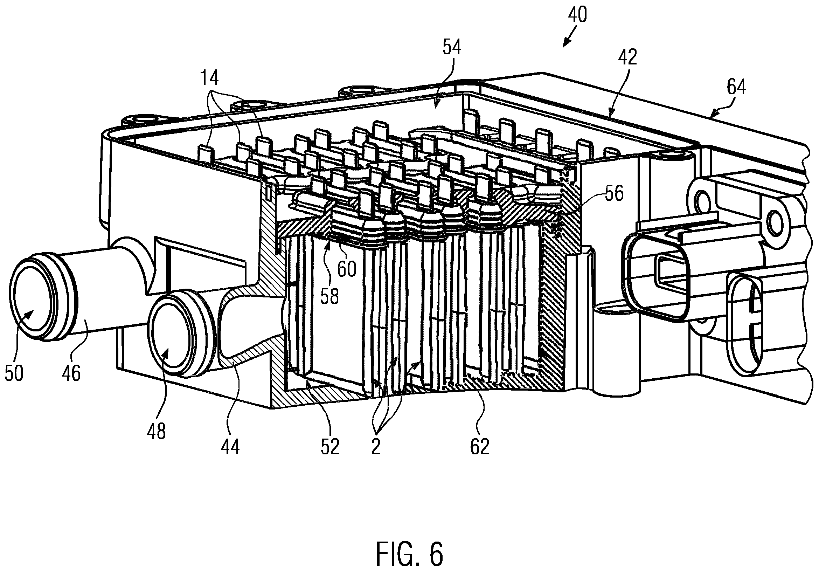

Fig. 6 zeigt eine perspektivische Draufsicht auf ein mit Bezugszeichen 40 gekennzeichnetes Heizergehäuse einer als Wasserheizer ausgebildeten elektrischen Heizvorrichtung. Das Heizergehäuse 40 hat ein Gehäusewannenelement 42 aus Kunststoff. Das Heizergehäuse 40 bildet einen Einlassstutzen 44 und einen Auslassstutzen 46 aus, die vorliegend einteilig an dem Gehäusewannenelement 42 ausgebildet sind. Die Stutzen 44, 46 sind als Schlauchanschlussstutzen ausgebildet und bilden eine Einlassöffnung 48 bzw. eine Auslassöffnung 50 zu einer mit Bezugszeichen 52 gekennzeichneten Heizkammer aus.

Die Heizkammer 52 ist durch eine Trennwand 56 aus Kunststoff von einer Anschlusskammer 54 getrennt und gegenüber dieser abgedichtet. Die Trennwand 56 bildet weibliche Steckelementaufnahmen 58 für PTC-Heizelemente 22 aus, die jeweils mit Hilfe einer mit dem Gehäuse 2 verbundenen Dichtmanschette 60 dichtend in die weiblichen Steckelementaufnahmen 58 eingesetzt und an einem Boden 62 des Gehäusewannenelementes 4 abgestützt sind. Bezugszeichen 64 kennzeichnet ein Steuerungsgehäuse, welches mit weiteren Details in DE 10 2019 205 848 beschrieben ist.

### Bezugszeichenliste

- 2: Gehäuse
- 4: Aufnahmeraum
- 6: PTC-Element
- 8: Oberfläche
- 10: Stirnfläche
- 12: Kontaktblech
- 14: Kontaktzunge
- 16: Stutzen
- 18: Aluminiumoxidplatte
- 20: Heizrippe
- 22: PTC-Heizeinrichtung
- 24: Gehäusekappe
- 26: Vorlaufender Rahmenholm
- 28: Elastische Führungslasche
- 30: Freifläche
- 31: Aufnahmetasche
- 32: Rand
- 34: Innenfläche
- 36: Ausnehmung
- 40: Heizergehäuse
- 42: Gehäusewannenelement
- 44: Einlassstutzen
- 46: Auslassstutzen
- 48: Einlassöffnung
- 50: Auslassöffnung
- 52: Heizkammer
- 54: Anschlusskammer
- 56: Trennwand
- 58: weibliche Steckelementaufnahme
- 60: Dichtmanschette
- 62: Boden
- 64: Steuerungsgehäuse

## Patentansprüche

1. PTC-Heizeinrichtung (22) zum Einbringen in eine Aufnahmetasche einer elektrischen Heizvorrichtung, mit einem rahmenförmigen Gehäuse (2), das zumindest ein PTC-Element (6), elektrisch mit dem PTC-Element (6) verbundene Leiterbahnen (12) und optional vorgesehene, wärmeleitend gegen das PTC-Element (6) anliegende Isolierlagen (18) als Einheit fügt und von Kontaktzungen (14) überragt ist, die zur Bestromung des PTC-Elementes (6) mit unterschiedlicher Polarität mit den Leiterbahnen (12) elektrisch leitend verbunden sind, wobei das rahmenförmige Gehäuse (6) einander gegenüberliegende Ausnehmungen ausbildet, in denen jeweils eine wärmeleitend mit der Hauptseitenfläche des PTC-Elementes (8) verbundene wärmeabgebende Freifläche (30) freiliegt,
wobei das rahmenförmige Gehäuse (2) einen vorlaufenden Rahmenholm (26) mit elastischen Führungslaschen (28) aufweist, **dadurch gekennzeichnet, dass** die Führungslaschen (28) an gegenüberliegenden Seiten des rahmenförmigen Gehäuses (2) die ihnen jeweils zugeordnete wärmeabgebende Freifläche (30) in einem Ausgangszustand überragen, von dem vorlaufenden Rahmenholm (26) schräg in Richtung auf die Freifläche (30) geneigt und elastisch verschwenkbar sind.

2. PTC- Heizeinrichtung nach Anspruch 1, **dadurch gekennzeichnet, dass** das rahmenförmigen Gehäuse (2) aus Kunststoff gebildet ist und die Führungslaschen (28) einteilig an dem Gehäuse (2) ausgebildet sind.

3. PTC- Heizeinrichtung nach Anspruch 1 oder 2, **dadurch gekennzeichnet, dass** der vorlaufende Rahmenholm (26) eine zumindest eine der nach innen verschwenkten Führungslaschen (28) in sich aufnehmende Ausnehmung (36) ausbildet.

4. PTC- Heizeinrichtung nach Anspruch 3, **dadurch gekennzeichnet, dass** die Ausnehmung (36) zwei, zu gegenüberliegenden Seiten abragende Führungslaschen (28) in sich aufnimmt.

5. PTC- Heizeinrichtung nach Anspruch 3 oder 4, **dadurch gekennzeichnet, dass** jeweils zwei Paare von zu gegenüberliegenden Seiten abragende Führungslaschen (28) in Breitenrichtung des Gehäuses (2) nebeneinander vorgesehen sind.

6. Elektrische Heizvorrichtung mit zumindest einer in einer Heizkammer (52) angeordneten PTC-Heizeinrichtung (22) mit einem Gehäuse (2), das zumindest ein PTC-Element (6), elektrisch mit dem PTC-Element (6) verbundene Leiterbahnen (12) und optional vorgesehene, wärmeleitend gegen das PTC-Element (6) anliegende Isolierlagen (18) als Einheit fügt und von Kontaktzungen (14) überragt ist, die zur Bestromung des PTC-Elementes (6) mit unterschiedlicher Polarität mit den Leiterbahnen (12) elektrisch leitend verbunden, und in einer Anschlusskammer (54) elektrisch angeschlossen sind, die von der Heizkammer (52) durch eine Trennwand (56) getrennt ist, wobei die PTC-Heizeinrichtung (22) in einer Aufnahmetasche (31) einer in die Heizkammer (52) hineinragenden Heizrippe (20) aufgenommen ist,
**dadurch gekennzeichnet,**
**dass** die PTC-Heizeinrichtung (22) nach einem der Ansprüche 1 bis 5 ausgebildet ist.

7. Verfahren zum Herstellen einer elektrischen Heizvorrichtung nach Anspruch 6, bei dem ein rahmenförmiges Gehäuse (2) mit an einem Rahmenholm vorgesehenen, elastischen Führungslaschen (28) ausgebildet wird, die an gegenüberliegenden Seiten des rahmenförmigen Gehäuses (2) abragen, mit zumindest einem PTC-Element (6), elektrisch mit dem PTC-Element (6) verbundenen Leiterbahnen (12) und optional vorgesehenen, wärmeleitend gegen das PTC-Element (6) anliegenden Isolierlagen (18) zur Herstellung einer PTC-Heizeinrichtung (22) mit einander gegenüberliegenden wärmeabgebenden Freiflächen (30) bestückt wird, und die PTC-Heizeinrichtung (22) mit dem Rahmenholm zuerst als vorlaufender Rahmenholm (26) in eine Aufnahmetasche (31) einer Heizrippe (20) der elektrischen Heizvorrichtung so eingeschoben wird, dass die Führungslaschen (28) zunächst gegen einander gegenüberliegende Ränder (32) der Aufnahmetasche (31) angelegt werden und mit zunehmender Einbringbewegung nach innen verschwenkt werden und die Freiflächen (30) an einander gegenüberliegende Innenwände der Aufnahmetasche (31) angelegt werden.

## Claims

1. PTC heating device (22) for the introduction into a receiving pocket of an electric heating device, with a frame-shaped casing (2) that joins at least one PTC element (6), conductor track (12) electrically connected to said PTC element (6), and optionally provided insulating layers (18) that are abutted in a thermally conductive manner against said PTC element (6) as a unit and has contact strips (14) projecting over itself which are connected to said conductor tracks (12) in an electrically conductive manner for energizing said PTC element (6) with different polarities, where said frame-shaped casing (6) forms mutually oppositely disposed recesses, in each of which a respective heat-emitting open surface (30) connected in a thermally conductive manner to the main side surface of said PTC element (8) is exposed, wherein said frame-shaped casing (2) has a leading frame member (26) with elastic guide tabs (28) **characterized in that** the elastic guide tabs (28) in an initial state project on oppositely disposed sides of said frame-shaped casing (2) over said heat-emitting open surface (30) respectively associated with them, are inclined obliquely from the leading frame member (26) in the direction of said open surface (30) and are elastically pivotable.

2. PTC heating device according to claim 1, **characterized in that** said frame-shaped casing (2) is formed from plastic material and said guide tabs (28) are formed integrally on said casing (2).

3. PTC heating device according to claim 1 or 2, **characterized in that** said leading frame member (26) forms a recess (36) accommodating at least one of said inwardly pivoted guide tabs (28).

4. PTC heating device according to claim 3, **characterized in that** said recess (36) accommodates two guide tabs (28) projecting towards oppositely disposed sides.

5. PTC heating device according to claim 3 or 4, **characterized in that** two respective pairs of guide tabs (28) projecting towards oppositely disposed sides are provided adjacent to each other in the width direction of said casing (2).

6. Electric heating device with at least one PTC heating device (22) arranged in a heating chamber (52), wherein said PTC heating device (22) has a frame-shaped casing (2) casing (2) that joins at least one PTC element (6), conductor tracks (12) electrically connected to said PTC element (2), and optionally insulating layers (18) abutting in a heat-conductive manner against said PTC element (2) as a unit and has contact strips (14) projecting over itself which are electrically conductively connected to said conductor tracks (12) for energizing said PTC element (2) with different polarities, which contact strips (14) are electrically connected in a connection chamber (54) which is separated from said heating chamber (52) by a partition wall (56), where said PTC heating device (22) is received in a receiving pocket (31) of a heating rib (20) projecting into said heating chamber (52), **characterized in that** the PTC heating device (22) is constructed according to one of claims 1 to 5.

7. Method for producing an electric heating device according to claim 6, in which a frame-shaped casing is formed with elastic guide tabs that are provided on a leading frame spar and that project on oppositely disposed sides from said frame-shaped casing, fitted with at least one PTC element, conductor tracks electrically connected to said PTC element and optionally provided insulating layers that are abutted in a thermally conductive manner to said PTC element for producing a PTC heating device with oppositely disposed heat-emitting open surfaces, and said PTC heating device is inserted first with said leading frame member into a receiving pocket of a heating rib of said electric heating device such that said guide tabs are initially abutted against oppositely disposed edges of said receiving pocket and are pivoted inwardly as the introduction motion progresses, and said open surfaces are abutted against oppositely disposed inner walls of said receiving pocket.

## Revendications

1. Dispositif de chauffage PTC (22) destiné à être inséré dans une poche de logement d'un dispositif de chauffage électrique, comprenant un boîtier en forme de cadre (2) qui comprend au moins un élément PTC (6), des pistes conductrices (12) connectées électriquement à l'élément PTC (6) et facultativement des couches isolantes (18) s'appliquant de manière thermoconductrice contre l'élément PTC (6) sous la forme d'une unité et d'où font saillie des languettes de contact (14), qui sont connectées de manière électriquement conductrice aux pistes conductrices (12) avec une polarité différente pour alimenter en courant l'élément PTC (6), dans lequel le boîtier en forme de cadre (6) forme des évidements opposés dans lesquels une surface libre (30) émettant de la chaleur connectée de manière thermoconductrice à la surface latérale principale de l'élément PTC (8) est exposée,
dans lequel le boîtier en forme de cadre (2) présente un longeron de cadre avant (26) avec des pattes de guidage élastiques (28), **caractérisé en ce que** les pattes de guidage (28) sur les côtés opposés du boîtier en forme de cadre (2), faisant saillie à partir de la surface de dégagement de chaleur (30) qui leur est associée dans un état initial, sont inclinées de manière oblique à partir du longeron de cadre avant (26) en direction de la surface libre (30) et peuvent pivoter de manière élastique.

2. Dispositif de chauffage PTC selon la revendication 1, **caractérisé en ce que** le boîtier en forme de cadre (2) est formé en matière plastique et les pattes de guidage (28) sont formées d'un seul tenant sur le boîtier (2).

3. Dispositif de chauffage PTC selon la revendication 1 ou 2, **caractérisé en ce que** le longeron de cadre avant (26) forme un évidement (36) recevant en son sein au moins une des pattes de guidage (28) pivotées vers l'intérieur.

4. Dispositif de chauffage PTC selon la revendication 3, **caractérisé en ce que** l'évidement (36) reçoit deux pattes de guidage (28) faisant saillie vers des côtés opposés.

5. Dispositif de chauffage PTC selon la revendication 3 ou 4, **caractérisé en ce que** respectivement deux paires de pattes de guidage (28) faisant saillie vers des côtés opposés sont prévues côte à côte dans la direction de la largeur du boîtier (2).

6. Dispositif de chauffage électrique comprenant au moins un dispositif de chauffage PTC (22) agencé dans une chambre de chauffage (52), avec un boîtier (2), le au moins un élément PTC (6), des pistes conductrices (12) connectées électriquement à l'élément PTC (6) et facultativement des couches isolantes (18) s'appliquant de manière thermoconductrice contre l'élément PTC (6)sous la forme d'une unité et d'où font saillie des languettes de contact (14) qui sont connectées de manière électriquement conductrice aux pistes conductrices (12) avec une polarité différente pour l'alimentation en courant de l'élément PTC (6), et qui sont connectées électriquement dans une chambre de connexion (54) qui est séparée de la chambre de chauffage (52) par une paroi de séparation (56), le dispositif de chauffage PTC (22) étant logé dans une poche de logement (31) d'une nervure de chauffage (20) pénétrant dans la chambre de chauffage (52),
**caractérisé en ce que,**
le dispositif de chauffage PTC (22) est réalisé selon l'une quelconque des revendications 1 à 5.

7. Procédé de fabrication d'un dispositif de chauffage électrique selon la revendication 6, dans lequel un boîtier en forme de cadre (2) est formé avec des pattes de guidage élastiques (28) prévues sur un longeron de cadre, qui font saillie sur des côtés opposés du boîtier en forme de cadre (2), est équipé d'au moins un élément PTC (6), de pistes conductrices (12) connectées électriquement à l'élément PTC (6) et facultativement de couches isolantes (18), s'appliquant de manière thermoconductrice contre l'élément PTC (6), pour la fabrication d'un dispositif de chauffage PTC (22) avec des surfaces libres de dégagement de chaleur (30) opposées, et le dispositif de chauffage PTC (22) est d'abord inséré avec le longeron de cadre en tant que longeron de cadre avant (26) dans une poche de logement (31) d'une nervure de chauffage (20) du dispositif de chauffage électrique de telle sorte que les pattes de guidage (28) sont d'abord appliquées contre des bords mutuellement opposés (32) de la poche de logement (31) et sont pivotées vers l'intérieur avec un déplacement d'insertion accru, et les surfaces libres (30) sont appliquées sur des parois intérieures mutuellement opposées de la poche de logement (31).
